(19) Europäisches Patentamt

European Patent Office

Office européen des brevets

(11) **EP 2 003 833 A1**

(12) **EUROPEAN PATENT APPLICATION**

(43) Date of publication:
**17.12.2008 Bulletin 2008/51**

(51) Int Cl.:
*H04L 25/03* [(2006.01)]   *H04L 25/02* [(2006.01)]

(21) Application number: **07450109.9**

(22) Date of filing: **15.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
• **Universität Wien**
  **1010 Wien (AT)**
• **Technische Universität Wien**
  **1040 Wien (AT)**

(72) Inventors:
• **Feichtinger, Hans Georg**
  **2130 Mistelbach (AT)**
• **Gröchenig, Karlheinz**
  **1020 Wien (AT)**

• **Hampejs, Mario**
  **1190 Wien (AT)**
• **Hlawatsch, Franz**
  **1130 Wien (AT)**
• **Hrycak, Tomasz**
  **1160 Wien (AT)**
• **Matz, Gerald**
  **1090 Wien (AT)**
• **Klotz, Andreas**
  **1170 Wien (AT)**
• **Tauböck, Georg**
  **1060 Wien (AT)**

(74) Representative: **Weiser, Andreas**
  **Patentanwalt,**
  **Hietzinger Hauptstrasse 4**
  **1130 Wien (AT)**

(54) **Method of equalizing a multicarrier signal for intercarrier interference**

(57)    A method of equalizing a multicarrier signal for intercarrier interference, the multicarrier signal having been received over a channel modeled by a frequency domain channel matrix, is characterized by the combination of the following steps of:

approximating the frequency domain channel matrix by a sparse matrix comprising at least a main band consisting of a significant diagonal of the frequency domain channel matrix and the adjacent parallel diagonals within a predetermined main band width, the remaining elements of the sparse matrix being zero; and

determining an equalized signal from solving the frequency domain channel matrix equation $x = H_B \cdot a$, $x$ being the received multicarrier signal, $H_B$ the sparse matrix and $a$ the equalized signal, by means of the iterative LSQR algorithm.

*Fig. 1*

EP 2 003 833 A1

**Description**

The present invention relates to a method of equalizing a multicarrier (MC) signal for intercarrier interference (ICI), the multicarrier signal having been received over a channel modeled by a frequency domain (FD) channel matrix.

Among various MC modulation schemes, orthogonal frequency division multiplexing (OFDM) is particularly attractive for broadband wireless communications, see J. A. C. Bingham, "Multicarrier modulation for data transmission: An idea whose time has come", in IEEE Comm. Mag., vol. 28, pp. 5-14, May 1990. Recently, there has been increasing interest in scenarios where the channel changes noticeably within an OFDM symbol due to user mobility and/or carrier frequency offsets. An example is mobile reception of DVB-H (digital video broadcasting - handheld), see e.g. S. Tomasin, A. Gorokhov, H. Yang and J. P. Linnartz, "Iterative interference cancellation and channel estimation for mobile OFDM", IEEE Trans. Wireless Comm., vol. 4, pp. 238-245, Jan 2005, which is based on DVB-T (digital video broadcasting - terrestrial) having been originally conceived for fixed receivers. In rapidly varying scenarios such as DVB-H large Doppler shifts cause strong ICI which constitutes a major source of performance degradation.

According to the state of the art, several techniques for combating ICI have been proposed hitherto. *Pulse shaping OFDM* or *biorthogonal frequency division multiplexing* (BFDM) generalize the classic *cyclic-prefix OFDM* by allowing the use of non-rectangular transmit and receive pulses in order to reduce ICI (see W. Kozek and A. F. Molisch, "Nonorthogonal pulseshapes for multicarrier communications in doubly dispersive channels", IEEE J. Sel. Areas Comm., vol. 16, pp. 1579-1589, Oct. 1998; G. Matz, D. Schafhuber, K. Gröchenig, M. Hartmann and F. Hlawatsch, "Analysis, optimization, and implementation of low-interference wireless multicarrier systems", IEEE Trans. Wireless Comm., vol. 6, issue 5, pp. 1921-1931, May 2007). Other approaches concern only the receiver processing to remain compliant with existing OFDM standards and are motivated by the observation that for strong ICI conventional single-tap equalization in the frequency (subcarrier) domain suffers from an error floor because the performance becomes ICI-limited above a certain signal-to-noise ration (SNR) threshold, see e.g. G. *Matz, D. Schafhuber, K. Gröchenig, M. Hartmann* and *F. Hla*watsch, loc. cit.; P. Robertson and S. Kaiser, "The effects of Doppler spreads in OFDM(A) mobile radio systems", Proc. IEEE VTC-1999, Amsterdam, The Netherlands, pp. 329-333, Sept. 1999; Y. Li and L. Cimini, "Bounds on the interchannel interference of OFDM in time-varying impairments", IEEE Trans. Comm., vol. 49, pp. 401-404, March 2001; M. Russell and G. L. Stüber, "Interchannel interference analysis of OFDM in a mobile environment", Proc. IEEE VTC-95, Chicago, IL, pp. 820-824, July 1995; X. Cai and G. B. Giannakis, "Bounding performance and suppressing intercarrier interference in wireless mobile OFDM", IEEE Trans. Comm., vol. 51, pp. 2047-2056, Dec. 2003, for an analysis of ICI effects on receiver performance.

For ICI reduction, therefore, frequency domain equalizers processing all subcarriers (see Y.-S. Choi, P. J. Voltz, and F. A. Cassara, "On channel estimation and detection for multicarrier signals in fast and selective Rayleigh fading channels", IEEE Trans. Comm., vol. 49, pp. 1375-1387, Aug. 2001) or just a few neighboring subcarriers simultaneously (see *X. Cai* and *G. B. Giannakis,* loc. cit.) have been proposed. The former approach is subject to a high computational complexity which renders practical implementations difficult or even impossible, in particular when the method shall be implemented on low-cost single chip processors commonly used in mobile devices. The latter approach, proposed with an LDL factorization (see L. Rugini, P. Banelli, and G. Leus, "Simple equalization of time-varying channels for OFDM", IEEE Comm. Letters, vol. 9, pp. 619-621, July 2005) is, although saving some computations, still of an undue complexity for practical implementations and in addition suffers from an increased bit error rate (BER).

Further known methods involve an "ICI-shaping" concentrating the ICI power within a small matrix band (see P. Schniter, "Low-complexity equalization of OFDM in doubly-selective channels", IEEE Trans. Signal Processing, vol. 52, pp. 1002-1011, April 2004), or use a linear approximation of the channel variations (see *S. Tomasin, A. Gorokhov, H. Yang* and *J. P. Linnartz,* loc. cit.; and W. G. Jeon, K. H. Chang and Y. S. Cho, "An equalization technique for orthogonal frequency-division multiplexing systems in time-variant multipath channels", IEEE Trans. Comm., vol. 47, pp. 27-32, Jan. 1999). All these methods suffer either from high complexity or high bit error rates, or both.

Apart from the known frequency domain methods, another linear equalization and ICI mitigation technique recently proposed by T. Hrycak and G. Matz, "Low-complexity time domain ICI equalization for OFDM communications over rapidly varying channels", in Proc. Asilomar Conf. Signals, Systems, Computers, Pacific Grove, CA, Oct.-Nov. 2006, operates in the time domain. By processing the received signal before Fast Fourier Transform (FFT) demodulation it is able to exploit the strict band structure of the time domain channel matrix. The technique uses the iterative LSQR algorithm (see C. C. Paige and M. A. Saunders, "LSQR: An algorithm for sparse linear equations and sparse least squares", ACM Trans. Math. Software, vol. 8, pp. 43-71, March 1982) which has excellent performance at low complexity due to its ability to regularize the (typically ill-conditioned) channel inversion problem by early termination of the iterations. However, the complexity order of the entire method is $(K \cdot M)$ floating point operations (flops) per iteration, where $K$ is the number of subcarriers and $M$ is the maximum delay of the channel. Thus, the method is only practically feasible when the channel's maximum delay is not too large.

It is therefore an object of the invention to provide an improved method of ICI equalization which is of low complexity, i.e. has only modest processing power requirements so that it can be implemented e.g. on low-cost single chip processors of mobile devices, which works well even in cases of large channel delays and which exhibits a low BER under all these constraints.

This aim is achieved with a method of the above identified kind which is characterized by the combination of the following steps of:

approximating the frequency domain channel matrix by a sparse matrix comprising at least a main band consisting of a significant diagonal of the frequency domain channel matrix and the adjacent parallel diagonals within a predetermined main band width, the remaining elements of the sparse matrix being zero; and

determining an equalized signal from solving the frequency domain channel matrix equation x = $H_B \cdot a$, x being the received multicarrier signal, $H_B$ the sparse matrix and a the equalized signal, by means of the iterative LSQR algorithm.

In this way, the advantages of the LSQR algorithm such as low BER and regularization potential for ill-conditioned channel matrices are combined with the advantages of using a banded channel matrix in the frequency domain, i.e. low complexity and the ability to cope with large channel delays. Applying the LSQR algorithm to a banded frequency domain channel matrix thus yields the combinatory effect of significant savings in computations and excellent BER performance even for rapidly varying channels with large delays. The method of the invention is thus particularly suited for implementations on low-cost single chip processors of mobile devices, e.g. to enhance DVB-H reception in fast moving mobile phones.

A particularly attractive feature of the LSQR algorithm is its intrinsic potential to regularize ill-conditioned channel matrix inversions if its iterations are terminated early. Therefore, in a preferred embodiment of the invention the iteration process within the LSQR algorithm is terminated early, i.e. after a predetermined number of iterations.

The complexity of the method of the invention can be further reduced by using pulse shaping. That is, said multicarrier signal is preferably pulse-shaped, particularly preferred shaped with smooth pulses. It has been found that smooth pulses yield a faster off-diagonal ICI decay and, hence, allow a reduction of the band width used in the banded-matrix approximation.

In most cases, said significant diagonal can be directly chosen as the main diagonal of the frequency domain channel matrix. In case of a significant frequency offset encountered on the channel it is particularly advantageous if said significant diagonal is chosen as the diagonal of the frequency domain channel matrix with the largest suitably normalized norm of its elements, preferably the largest average of the squared absolute values of its elements.

According to a further preferred embodiment of the inventive method said sparse matrix is a multi-banded matrix comprised of said main band and at least two side bands of further parallel diagonals of the frequency domain channel matrix, each side band being distant from the main band and having a predetermined side band width, the remaining elements of the sparse matrix being zero. The diagonals in the side bands complement the shorter diagonals in the main band up to the length of the main diagonal for the computation of the LSQR algorithm, thus further reducing bit rate errors.

From practical numerical assessments it has been found that a good tradeoff between complexity and BER is achieved when said predetermined main band width, measured as the number of diagonals contained, is between count "3" and 10% of the matrix size, preferably 3 to 11 for a matrix size of about 256. When side bands are employed, it is particularly advantageous when said predetermined side band width, measured as the number of diagonals contained, is between count "1" and 5% of the matrix size, preferably 1 to 5 for a matrix size of about 256.

Furthermore, a good matrix regularization effect of the LSQR algorithm that keeps BER low has been found when said predetermined number of iterations in the LSQR algorithm is 10 to 20, preferably about 15.

In general, the equalization method of the invention can be applied to all kinds of multicarrier environments and channels. A particularly preferred application of the inventive method is, however, in OFDM (orthogonal frequency division multiplexing) transmissions, i.e. wherein said channel is an OFDM channel and said multicarrier signal is an OFDM signal vector, where the above-mentioned advantages can fully deploy.

The invention will now be described in detail under reference to an exemplary preferred embodiment thereof and the enclosed drawings in which:

Fig. 1 depicts a block diagram of an exemplary multicarrier transmission system;
Fig. 2 shows the banded approximation of the frequency domain channel matrix of the system of Fig. 1 according to the method of the invention schematically;
Fig. 3 is a diagram of the reduction in complexity achieved by the method of the invention as compared to a state of the art method; and
Fig. 4 is a diagram of the reduction in BER obtained by the optional pulse-shaping within the method of the invention.

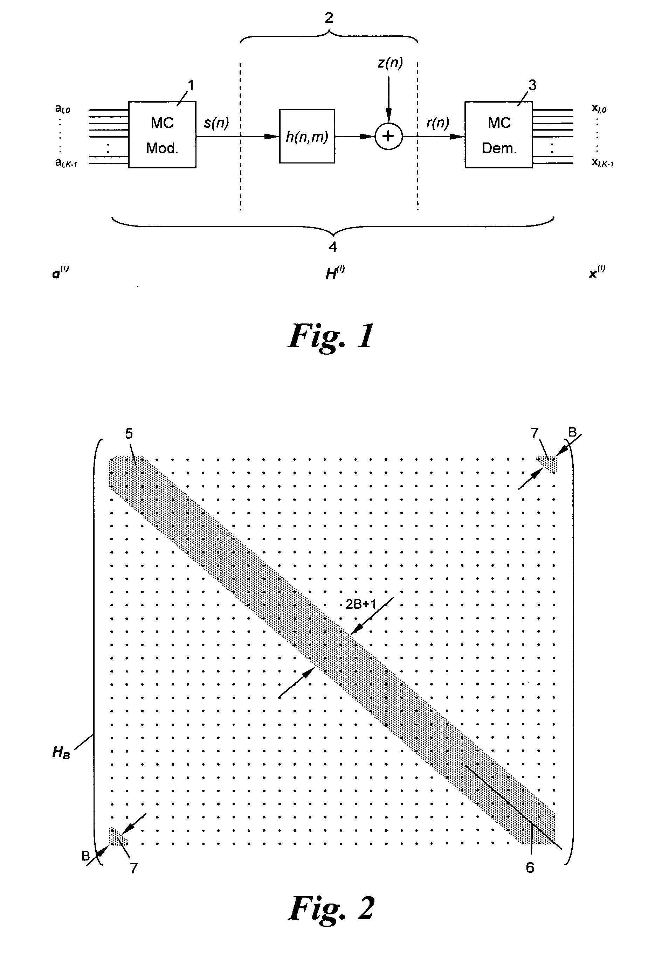

With reference to Fig. 1 a multicarrier (MC) modulator 1, here an OFDM modulator, transforms a time sequence of data symbol vectors $a^{(l)}$ (*l* being the index of symbol time) into a transmit signal *s(n)* for transmission over a physical channel 2. The physical channel 2 is defined by a time-variant impulse response h (n,m) and an additive noise component *z(n)*. The output of the physical channel 2, received signal *r(n)*, is transformed by an MC demodulator 3, here an OFDM demodulator, into a received (vectorial) MC signal $x^{(1)}$.

The entire chain of MC modulator 1, physical channel 2 and MC demodulator 3 can be considered as an MC channel 4 modeled by - for each symbol time instant *l* - a channel matrix $H^{(l)}$ in the frequency domain, as is well known to the man skilled in the art and will also be explained further below. Due to Doppler effects encountered in highly mobile physical channels 2 any transmissions over the MC channel 4 are subject to intercarrier interference (ICI) affecting the received MC signal $x^{(1)}$. The equalization of this ICI at the receiver (demodulator 3) side of the MC system will now be dealt with in detail.

We consider a pulse-shaping MC system with *K* subcarriers and symbol period *N* (see *W. Kozek* and *A. F. Molisch,* loc. cit.). As explained further below, pulse shaping allows the use of smooth transmit and receive pulses which further reduces ICI. Conventional cyclic-prefix OFDM would be a simplified case of this setting, corresponding to rectangular pulses.

The MC modulator 1 produces the (equivalent baseband) transmit signal

$$s(n) = \sum_{l=-\infty}^{\infty} \sum_{k=0}^{K-1} a_{l,k} g_{l,k}(n) \quad, \qquad (1)$$

where $a_{l,k}$ with $l \in Z$, $k \in \{0, ..., K - 1\}$ denotes the data symbols,

$$g_{l,k}(n) = g(n - lN) e^{j2\pi\frac{k}{K}(n-lN)}$$

is a time-frequency shifted version of a transmit pulse *g(n)*, and $n \in Z$. Assuming a time-varying and time-dispersive (frequency-selective) channel, the received signal is

$$r(n) = \sum_{m=0}^{M} h(n,m) s(n-m) + z(n) \quad, \qquad (2)$$

where *h(n,m)* denotes the time-varying impulse response of the physical channel 2, *M* is the maximum channel delay, and z(n) is noise. Finally, the MC demodulator 3 computes the inner products

$$x_{l,k} = \langle r, \gamma_{l,k} \rangle = \sum_{n=-\infty}^{\infty} r(n) \gamma_{l,k}^{*}(n) \quad, \qquad (3)$$

where $\gamma_{l,k}(n) = \gamma(n - lN) e^{j2\pi\frac{k}{K}(n-lN)}$ is a time-frequency shifted version of a receive pulse y(n). For rectangular pulses

$$g(n) = \begin{cases} 1, & -(N-K) \leq n \leq K-1 \\ 0, & otherwise \end{cases} \qquad (4)$$

$$\gamma(n) = \begin{cases} 1, & 0 \le n \le K-1 \\ 0, & otherwise \end{cases} \qquad (5)$$

the pulse-shaping MC system reduces to conventional OFDM with cyclic prefix length $N - K \ge 0$.

Combining eq. (1), (2), and (3), we obtain the following relation between the transmit symbols $a_{l,k}$ and receive symbols $x_{l,k}$ (see *W. Kozek and A. F. Molisch,* loc. cit.):

$$x_{l,k} = \sum_{l'=-\infty}^{\infty} \sum_{k'=0}^{K-1} H_{l,k;l',k'} a_{l',k'} + z_{l,k} \quad , \qquad (6)$$

with

$$H_{l,k;l',k'} = \sum_{n=-\infty}^{\infty} \sum_{m=0}^{M} h(n+lN,m) g(n-m+(l-l')N) \gamma^*(n) e^{j\frac{2\pi}{K}(k'(n-m+m(l-l')N)-kn)} \qquad (7)$$

and

$$z_{l,k} = \langle z, \gamma_{l,k} \rangle .$$

The coefficients $H_{l,k;l',k'}$ describe the MC system channel 4 that subsumes the MC modulator 1, the doubly spread physical channel 2, and the MC demodulator 3. In general, this MC system channel 4 introduces both intersymbol interference (ISI) (characterized by $H_{l,k;l',k'}$ for $l \ne l'$) and ICI (characterized by $H_{l,k;l',k'}$ for $k \ne k'$).

To develop the concept of the frequency domain channel matrix H we now consider a transmit pulse g(n) and receive pulse y(n) such that the support of g(n) extended by the maximum channel delay $M$ does not overlap with the support of $\gamma(n)$ shifted by nonzero multiples of the symbol period N. This condition is satisfied, in particular, in the case of cyclic-prefix OFDM (see eq. (4), (5)) provided that $M \le N - K$. For such pulses, it follows from eq. (7) that the ISI is zero, i.e.,

$$H_{l,k;l',k'} = 0 \ \text{for} \ l \ne l'.$$

As a consequence, in cases of ISI being substantially zero, the system channel 4 can be completely described by the sequence of frequency domain channel matrices $H^{(l)}$ of size $K \times K$ defined as $(H^{(l)})_{k,k'} = (H)_{l,k;l,k'}$ with k, k' = 0 ... K-1. In cases where ISI is not zero the frequency domain channel matrices $H^{(l)}$ are an approximation of the MC system. The system channel input-output relation eq. (6) can thus for both cases be compactly written as

$$x^{(l)} = H^{(l)} a^{(l)} + z^{(l)}, \qquad l \in Z \qquad (8)$$

with the vectors

$$x^{(l)} = \left[ x_{l,0} ... x_{1,K-1} \right]^T , \qquad a^{(l)} = \left[ a_{l,0} ... a_{l,K-1} \right]^T , \ \text{and} \ z^{(l)} = \left[ z_{l,0} ... z_{l,K-1} \right]^T .$$

The ICI is described by the off-diagonal entries of the channel matrices $H^{(l)}$, which have been shown to become small if they are sufficiently distant from the main diagonal. This justifies the next step to approximate $H^{(l)}$ by a banded matrix.

For simplicity reasons the superscript $^{(l)}$ is suppressed from now on; however, it should be clear that the variable H used for the frequency domain channel matrix in the present disclosure always stands for $H^{(l)}$, i.e. H at a given symbol time $l$.

Because H may have a very high condition number - particularly for channels with large maximum delay and Doppler frequency shift - a regularization of the H matrix is necessary. To this end, applicants have found that the LSQR algorithm (see e.g. *T. Hrycak* and *G. Matz,* loc. cit.; and *C. C. Paige* and *M. A. Saunders,* loc. cit.) can be employed with great benefits if special measures are taken to reduce the complexity of its application in this context.

A detailed analysis of the frequency domain channel matrix H shows that H exhibits off-diagonal decay within $0 \leq |q| \leq K/2$ (with q = k'-k) and off-diagonal growth within $K/2 \leq |q| \leq K-1$. We can thus approximate H by a triple-banded matrix $H_B$ with a main band 5 of a predetermined main band width $(2B + 1)$ about the main diagonal 6, and two side bands 7 of a predetermined side band width B in the lower-left and upper-right corners:

$$\left(H_{\mathrm{B}}\right)_{k,k'} = \begin{cases} \left(H\right)_{k,k'}\,, & \left|k'-k\right| \leq B \quad or \quad K-B \leq \left|k'-k\right| \leq K-1 \\ 0, & otherwise \end{cases}.$$

The banded channel matrix $H_B$ is schematically depicted in Fig. 2: The elements of the matrix are shown as dots and the main and side bands 5, 7 as grey hatching underlying the diagonals comprised by the bands.

The banded matrix $H_B$ is a *sparse* matrix in that all elements residing outside the main and side bands 5, 7 are zero. As will be shown in the now following description, the application of the LSQR algorithm to the sparse matrix $H_B$ will thus yield a significant reduction of complexity.

The LSQR algorithm is an iterative algorithm for solving least-squares problems that is specifically tailored to sparse matrices (see *C. C. Paige* and *M. A. Saunders,* loc. cit.). In exact arithmetic, it is equivalent to the *conjugate gradient* method *for the normal equations* (CGNE). However, it has advantages regarding complexity and numerical stability in fixed-point arithmetic. In our context, the normal equations are given by

$$H_{\mathrm{B}}^{\mathrm{H}} H_{\mathrm{B}} a = H_{\mathrm{B}}^{\mathrm{H}} x \quad,$$

where a and x are the data symbol vector and the demodulated (received) symbol vector, respectively, and the superscript $(\cdot)^H$ denotes the Hermitian transposition. These normal equations are obtained from eq. (8) by disregarding the noise z, banding H to form $H_B$, and left-multiplying by $H_B{}^H$.

At the i-th LSQR iteration, an approximate solution of the normal equations is obtained by minimizing $\|H_B a - x\|$ with respect to a, subject to the constraint that a lies in the Krylov subspace $K(H_B{}^H H_B, H_B{}^H x, i)$. (A Krylov subspace $K(A, b,$ i) is defined as the space spanned by the i + I vectors $b, Ab, ..., A^i b$, see e.g. in G. H. Golub and C. F. Van Loan, Matrix Computations, Baltimore: Johns Hopkins University Press, 3rd ed., 1996, Section 9.1.1).

Although these Krylov subspaces are generated by $H_B{}^H H_B$, the performance of the LSQR algorithm is governed by the condition number of $H_B$ and not by that of $H_B{}^H H_B$ (which is the square of the condition number of $H_B$). This is important since already the condition number of $H_B$ is high for channels with large delay and Doppler (the same, by the way, is true for the non-banded channel matrix H and its time domain counterpart).

The high condition number of $H_B$ is also the reason why a regularization is necessary. With the LSQR algorithm, the regularization can be very easily achieved by early termination of the iteration process (see P. C. Hansen, ed., Rank-Deficient and Discrete Ill-Posed Problems: Numerical Aspects of Linear Inversion. Philadelphia (PA): SIAM, 1998). This is because the initial iterations reduce the approximation error $(H_B a - x)$ in the directions of the dominant right singular vectors of $H_B$, which are less affected by noise than the directions corresponding to small singular values. There is an optimum number of LSQR iterations such that the error norm $\|H_B a - x\|$ is minimized, that is, most of the ICI is equalized with low noise enhancement. Fewer iterations result in larger residual ICI whereas more iterations produce stronger noise enhancement. Fortunately, the minimum is usually not very pronounced, so that moderate deviations from the optimum number of iterations do not degrade the performance significantly.

The complexity order of the LSQR algorithm is $(K(2B+1)I)$ flops, where $I$ denotes the number of iterations used. Thus, the complexity is just linear in the number of subcarriers $K$, the matrix band width B, and the number of iterations $I$. The application of the LSQR algorithm to the sparse matrix $H_B$ will thus lead to numerical stability, inherent regularization, and low computational complexity.

The LSQR algorithm is now explained in further detail. The two main parts of the LSQR algorithm are a Golub-Kahan bidiagonalization and a cheap QR decomposition solving a bidiagnoal least squares problem. The Golub-Kahan bidiagonalization (see *G. H. Golub* and *C. F. Van Loan,* loc. cit) is an iterative procedure that constructs vectors $u_i$, $v_i$ and positive constants $\alpha_i$, $\beta_i$ as follows:

    1. Initialization:

$$\alpha_1 = \left\| H_B^H x \right\|, \quad \beta_1 = \left\| x \right\|, \quad u_1 = \frac{x}{\beta_1}, \quad v_1 = \frac{H_B^H x}{\alpha_1}.$$

    2. Recursion:

$$\alpha_{i+1} = \left\| H_B^H u_i - \beta_i v_i \right\|$$

$$\beta_{i+1} = \left\| H_B v_i - \alpha_i u_i \right\|$$

$$u_{i+1} = \frac{1}{\beta_{i+1}} \left( H_B v_i - \alpha_i u_i \right)$$

$$v_{i+1} = \frac{1}{\alpha_{i+1}} \left( H_B^H u_i - \beta_i v_i \right)$$

Theoretically, this recursion is terminated when $\alpha_{i+1} = 0$ or $\beta_{i+1} = 0$. The vectors $u_i, i = 1, 2, ...$ are orthonormal, and so are the vectors $v_i, i = 1, 2, ...$. They allow to reduce the mini-imization problem $\min_a \| H_B a - x \|$ over the i-th Krylov subspace to the bidiagonal least squares problem

$$\min_w \left\| B_i w - \beta_1 e_1 \right\|, \qquad\qquad (9)$$

where $e_1 = [1\ 0\ ...\ 0]^T$ and $B_i$ is the *(i+1) x i* lower bidiagonal matrix with $\alpha_1, ...\ \alpha_i$ on the main diagonal and $\beta_2, ...\ \beta_{i+1}$ on the first subdiagonal. The i-th approximate solution of the original problem is then given by

$$a_i = [v_1 ... v_i] w_i$$

where $w_i$ is the solution of eq. (9) at the i-th iteration.

The second part of the LSQR algorithm is the solution of the bidiagonal least squares problem eq. (9) through a QR factorization of $B_i$ (see *G. H. Golub* and *C. F. Van Loan,* loc. cit.). The computational cost of this step is negligible because $B_i$ is bidiagonal. Furthermore, *C. C. Paige* and *M. A. Saunders* (loc. cit) present a recursion to compute $w_i$ via a simple update of $w_{i-1}$.

We will now provide simulation results to compare the performance of the method of the invention with that of a method of the state of the art and to demonstrate the added benefit of the preferred pulse shaping.

Example I: Complexity evaluation

We first compared the complexity of the banded frequency domain (FD) LSQR equalization method of the invention with that of a time domain (TD) LSQR equalization method as disclosed in *T. Hrycak* and *G. Matz,* loc. cit. We simulated a cyclic-prefix OFDM system (i.e. using rectangular pulses eq. (4), (5)) with $K$ = 256 subcarriers and cyclic prefix length $N$ - $K$ = 32, whence $N$ = 288. Furthermore, we used a 4-QAM symbol alphabet with Gray labelling, a rate-1/2 convolutional code (generator polynomial ($13_8$, $15_8$)), and 32 x 16 row-column interleaving. A noisy wide-sense stationary uncorrelated scattering (WSSUS) channel characterized by uniform delay and Doppler profiles (brick-shaped scattering function) with maximum delay $M$ = 7 ... 31 and maximum Doppler $\xi_{max}$ = 1 · 10$^{-4}$ ... 4 · 10$^{-3}$ was simulated according to D. Schafhuber, G. Matz, and F. Hlawatsch, "Simulation of wideband mobile radio channels using subsampled ARMA models and multistage interpolation", Proc. 11th IEEE Workshop on Statistical Signal Processing, (Singapore), pp. 571-574, Aug. 2001. The given range of $\xi_{max}$ corresponds to a maximum normalized Doppler frequency (physical Doppler frequency divided by subcarrier spacing) between 1.28% and 51.2%. We used I = 15 iterations for both the FD and the TD methods.

The complexity of the TD method is *(K(M+1)I)* flops, whereas that of the inventive banded FD LSQR method is effectively *(K(2B+1)I)* flops. We defined a "complexity ratio" of

$$\rho = \frac{M+1}{2B+1} \ .$$

Roughly speaking, the inventive banded FD LSQR method is less complex than the state of the art TD method for $\rho > 1$ and the other way round for $\rho < 1$. It should be noted that the matrix band width B is a design parameter of the method of the invention that determines both its complexity and equalization performance (better performance is typically obtained for a larger B, at the cost of a larger complexity).

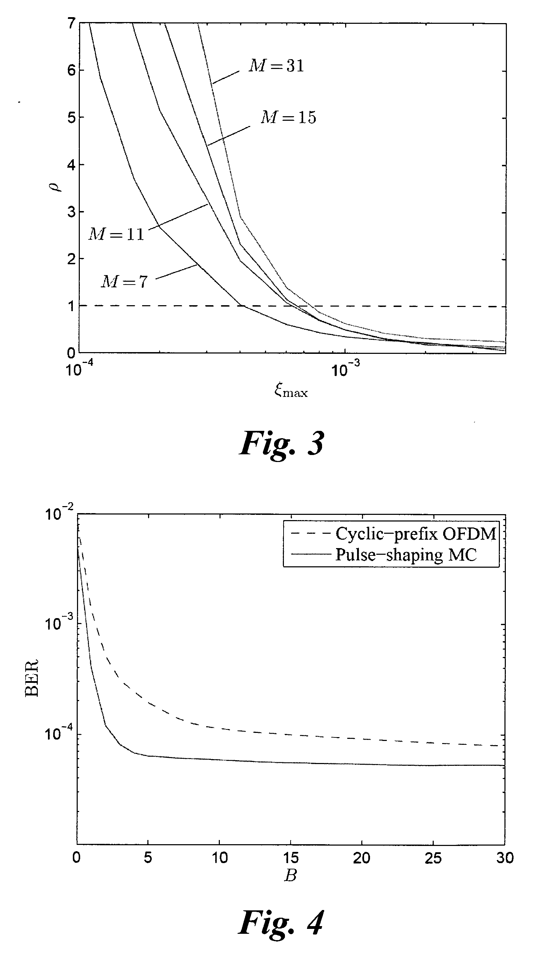

Fig. 3 shows the complexity ratio p for B chosen as the minimum value for which the performance loss of the inventive FD method is marginal in the sense that the coded BER is higher by at most 10% than for the state of the art TD method, i.e. BER$_{FD}$ ≤ 1.1 · BER$_{TD}$. The complexity ratio p is plotted versus $\xi_{max}$ for different values of $M$ at a fixed signal-to-noise ratio (SNR) of 17 dB.

The' overall picture conveyed by Fig. 3 is that, although the conventional TD method may be less complex for large maximum delay Doppler $\xi_{max}$, the banded FD LSQR method of the invention is less complex for a large maximum delay $M$. Furthermore, when $M$ is large (strongly dispersive channel), the inventive FD method is still less complex than the comparison method even for larger values of $\xi_{max}$ (high mobility).

Example II: BER evaluation and pulse shaping benefits

Next, we compared the coded BER performance of the method of the invention within a pulse-shaping MC system (smooth pulses) and a cyclic-prefix OFDM system (rectangular pulses eq. (4), (5)). The system and channel parameters were as in the previous simulation, except that we used a fixed maximum delay $M$ = 19 and maximum Doppler $\xi_{max}$ = 2 · 10$^{-3}$ (corresponding to a maximum normalized Doppler frequency of 25.6%). The transmit and receive pulses were equal *(g (n) = γ(n))* and constructed as follows. A rectangular pulse of length 276 was convolved 20 times with a rectangular pulse of length 2, resulting in a smooth pulse of length 296. This pulse was orthogonalized as described in *G. Matz, D. Schafhuber, K. Gröchenig, M. Hartmann* and *F. Hlawatsch,* loc. cit., which yielded a pulse with the same ISI/ICI decay characteristic but avoided noise enhancement at the demodulation step eq. (3) and provided perfect reconstruction.

In Fig. 4, the coded BER obtained with the banded FD LSQR method of the invention within the pulse-shaping MC system and the cyclic-prefix OFDM system is plotted as a function of the matrix band width B at an SNR of 17 dB. In both cases I = 15 LSQR iterations were used. It is seen that pulse shaping can yield significant performance gains over the cyclic-prefix OFDM system. For both systems, we see that the inclusion of already a few off-diagonals in addition to the main diagonal in the inventive method yields a significant BER reduction.

The method of the invention is not limited to the specific exemplary embodiments disclosed herein but encompasses all variants and modifications within the scope of the appended claims which will be apparent for the man skilled in the art. For example, in a simplified embodiment instead of a multi- or triple-banded sparse matrix a single-banded sparse matrix could be used consisting of only the main band 5. In addition, the main and side bands 5, 7 could be offset (shifted in off-diagonal direction) from the main diagonal when the MC channel 4 is subject to a significant frequency offset encountered on the physical channel 2. In this case the main band 5 will be centered not about the main diagonal, but about a significant diagonal of the matrix which can be easily identified as the diagonal which exhibits the largest suitably normalized norm (the term "norm" here being used in its mathematical sense) of its elements, e.g. the largest suitably normalized 11-norm (average of the absolute values), 12-norm (average of the squared absolute values), 1∞-norm (maximum absolute value) et cet., for example in a pre-processing step.

**Claims**

1. A method of equalizing a multicarrier signal for intercarrier interference, the multicarrier signal having been received over a channel modeled by a frequency domain channel matrix, **characterized by** the combination of the following steps of:

   approximating the frequency domain channel matrix by a sparse matrix comprising at least a main band consisting of a significant diagonal of the frequency domain channel matrix and the adjacent parallel diagonals within a predetermined main band width, the remaining elements of the sparse matrix being zero; and determining an equalized signal from solving the frequency domain channel matrix equation $x = H_B \cdot a$, x being the received multicarrier signal, $H_B$ the sparse matrix and a the equalized signal, by means of the iterative LSQR algorithm.

2. The method of claim 1, wherein the iteration process within the LSQR algorithm is terminated early, i.e. after a predetermined number of iterations.

3. The method of claim 1 or 2, wherein said multicarrier signal is pulse-shaped, preferably with smooth pulses.

4. The method of any of the claims 1 to 3, wherein said significant diagonal is chosen as the main diagonal of the frequency domain channel matrix.

5. The method of any of the claims 1 to 3, wherein said significant diagonal is chosen as the diagonal of the frequency domain channel matrix with the largest suitably normalized norm of its elements, preferably the largest average of the squared absolute values of its elements.

6. The method of any of the claims 1 to 5, wherein said sparse matrix is a multi-banded matrix comprised of said main band and at least two side bands of further parallel diagonals of the frequency domain channel matrix, each side band being distant from the main band and having a predetermined side band width, the remaining elements of the sparse matrix being zero.

7. The method of any of the claims 1 to 6, wherein said predetermined main band width, measured as the number of diagonals contained, is between count "3" and 10% of the matrix size, preferably 3 to 11 for a matrix size of about 256.

8. The method of claim 6 or 7, wherein said predetermined side band width, measured as the number of diagonals contained, is between count "1" and 5% of the matrix size, preferably 1 to 5 for a matrix size of about 256.

9. The method of any of the claims 2 to 8, wherein said predetermined number of iterations is 10 to 20, preferably about 15.

10. The method of any of the claims 1 to 9, wherein said channel is an OFDM (orthogonal frequency division multiplexing) channel and said multicarrier signal is an OFDM signal vector.

**Fig. 1**

**Fig. 2**

**Fig. 3**

**Fig. 4**

**European Patent Office**

## EUROPEAN SEARCH REPORT

Application Number

EP 07 45 0109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SCHNITER P: "Low-Complexity Equalization of OFDM in Doubly Selective Channels" IEEE TRANSACTIONS ON SIGNAL PROCESSING, IEEE SERVICE CENTER, NEW YORK, NY, US, vol. 52, no. 4, April 2004 (2004-04), pages 1002-1011, XP011109169 ISSN: 1053-587X * Section IV. Symbol Estimation * ----- | 1-10 | INV. H04L25/03 H04L25/02 |
| Y | BATEMAN D., ADLER A.: "Sparse Matrix Implementation in Octave" POWERPOINT PRESENTATION, [Online] April 2006 (2006-04), pages 1-25, XP002456646 Ottawa, Gif-Sur-Yvette Retrieved from the Internet: URL:http://www.sce.carleton.ca/faculty/adler/talks/2006/bateman-adler-octave2006.pdf> [retrieved on 2007-10-26] * the whole document * ----- | 1-10 | |
| A,D | HRYCAK T., MATZ G.: "Low-Complexity Time-Domain ICI Equalization for OFDM Communications over rapidly varying channels" PROC. ASILOMAR CONF. SIGNALS, SYSTEMS, COMPUTERS, [Online] September 2006 (2006-09), - October 2006 (2006-10) pages 1-5, XP002456647 Pacific Grove, CA Retrieved from the Internet: URL:http://publik.tuwien.ac.at/files/pub-et_11625.pdf> [retrieved on 2007-10-26] * 3. Proposed Equalizers * ----- -/-- | 1-10 | TECHNICAL FIELDS SEARCHED (IPC) H04L |

The present search report has been drawn up for all claims

| Place of search | Date of completion of the search | Examiner |
|---|---|---|
| Munich | 26 October 2007 | Belloni, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

**EUROPEAN SEARCH REPORT**

Application Number

EP 07 45 0109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JACOBSEN M ET AL: "Subspace Preconditioned LSQR for Discrete Ill-Posed Problems" BIT NUMERICAL MATHEMATICS, KLUWER ACADEMIC PUBLISHERS, DO, vol. 43, no. 5, 1 December 2003 (2003-12-01), pages 975-989, XP019360233 ISSN: 1572-9125 * the whole document * | 1-10 | |
| A,D | PAIGE C. C., SAUNDERS M. A.: "LSQR: an algorithm for sparse linear equations and sparse least squares" ACM TRANSACTIONS ON MATHEMATICAL SOFTWARE, [Online] vol. 8, no. 1, March 1982 (1982-03), pages 43-71, XP002456648 Retrieved from the Internet: URL:http://www.stanford.edu/group/SOL/software/lsqr/lsqr-toms82a.pdf> [retrieved on 2007-10-26] * the whole document * | 1-10 | |

TECHNICAL FIELDS SEARCHED (IPC)

The present search report has been drawn up for all claims

| Place of search | Date of completion of the search | Examiner |
|---|---|---|
| Munich | 26 October 2007 | Belloni, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. A. C. BINGHAM.** Multicarrier modulation for data transmission: An idea whose time has come. *IEEE Comm. Mag.,* May 1990, vol. 28, 5-14
- **S. TOMASIN ; A. GOROKHOV ; H. YANG ; J. P. LINNARTZ.** Iterative interference cancellation and channel estimation for mobile OFDM. *IEEE Trans. Wireless Comm.,* January 2005, vol. 4, 238-245
- **W. KOZEK ; A. F. MOLISCH.** Nonorthogonal pulseshapes for multicarrier communications in doubly dispersive channels. *IEEE J. Sel. Areas Comm.,* October 1998, vol. 16, 1579-1589
- **G. MATZ ; D. SCHAFHUBER ; K. GRÖCHENIG ; M. HARTMANN ; F. HLAWATSCH.** Analysis, optimization, and implementation of low-interference wireless multicarrier systems. *IEEE Trans. Wireless Comm.,* May 2007, vol. 6 (5), 1921-1931
- **P. ROBERTSON ; S. KAISER.** The effects of Doppler spreads in OFDM(A) mobile radio systems. *Proc. IEEE VTC-1999,* September 1999, 329-333
- **Y. LI ; L. CIMINI.** Bounds on the interchannel interference of OFDM in time-varying impairments. *IEEE Trans. Comm.,* March 2001, vol. 49, 401-404
- **M. RUSSELL ; G. L. STÜBER.** Interchannel interference analysis of OFDM in a mobile environment. *Proc. IEEE VTC-95,* July 1995, 820-824
- **X. CAI ; G. B. GIANNAKIS.** Bounding performance and suppressing intercarrier interference in wireless mobile OFDM. *IEEE Trans. Comm.,* December 2003, vol. 51, 2047-2056
- **Y.-S. CHOI ; P. J. VOLTZ ; F. A. CASSARA.** On channel estimation and detection for multicarrier signals in fast and selective Rayleigh fading channels. *IEEE Trans. Comm.,* August 2001, vol. 49, 1375-1387
- **L. RUGINI ; P. BANELLI ; G. LEUS.** Simple equalization of time-varying channels for OFDM. *IEEE Comm. Letters,* July 2005, vol. 9, 619-621
- **P. SCHNITER.** Low-complexity equalization of OFDM in doubly-selective channels. *IEEE Trans. Signal Processing,* April 2004, vol. 52, 1002-1011
- **W. G. JEON ; K. H. CHANG ; Y. S. CHO.** An equalization technique for orthogonal frequency-division multiplexing systems in time-variant multipath channels. *IEEE Trans. Comm.,* January 1999, vol. 47, 27-32
- **T. HRYCAK ; G. MATZ.** Low-complexity time domain ICI equalization for OFDM communications over rapidly varying channels. *Proc. Asilomar Conf. Signals, Systems, Computers, Pacific Grove,* October 2006
- **C. C. PAIGE ; M. A. SAUNDERS.** LSQR: An algorithm for sparse linear equations and sparse least squares. *ACM Trans. Math. Software,* March 1982, vol. 8, 43-71
- **G. H. GOLUB ; C. F. VAN LOAN.** Matrix Computations. Johns Hopkins University Press, 1996
- Rank-Deficient and Discrete Ill-Posed Problems: Numerical Aspects of Linear Inversion. 1998
- **D. SCHAFHUBER ; G. MATZ ; F. HLAWATSCH.** Simulation of wideband mobile radio channels using subsampled ARMA models and multistage interpolation. *Proc. 11th IEEE Workshop on Statistical Signal Processing, (Singapore,* August 2001, 571-574